# EUROPEAN PATENT APPLICATION

(11) **EP 3 407 180 A1**
(43) Date of publication of application: **28.11.2018**
(21) Application number: 17812623.1
(22) Date of filing: 08.06.2017
(51) Int. Cl.: G06F 3/16

(54) **AUDIO STREAM PROCESSING METHOD AND RELATED DEVICES**

(30) Priority: 16.06.2016 CN 201610429032
(71) Applicant: Guangdong Oppo Mobile Telecommunications Corp., Ltd., Dongguan, Guangdong 523860 (CN)
(72) Inventor: GAN, Gaoting, Dongguan Guangdong 523860 (CN); LI, Yajun, Dongguan Guangdong 523860 (CN); TU, Guang, Dongguan Guangdong 523860 (CN); YANG, Hai, Dongguan Guangdong 523860 (CN)
(74) Representative: Manitz Finsterwald Patentanwälte PartmbB
(86) International application number: PCT/CN2017/087586
(87) International publication number: WO 2017/215512

(57) **Abstract**

An audio stream processing method and related devices. The audio stream processing method comprises: obtaining a playing control instruction which aims at an audio stream, the playing control instruction being used for indicating a target application of a mobile terminal to play the audio stream; determining whether the mobile terminal creates an application-level sound effect example corresponding to the target application or not; if yes, configuring an application-level sound effect parameter for the audio stream by means of the application-level sound effect example, and playing the audio stream configured with the application-level sound effect parameter; and if not, configuring a global sound effect parameter for the audio stream by means of a prestored global sound effect example, and playing the audio stream configured with the global sound effect parameter. The solution is favorable for improving the intelligence of sound effect mode setting when an audio steam of a mobile terminal is played, avoiding superposition of multiple sound effects, and improving user experience.

## Description

### CROSS-REFERENCE TO RELATED APPLICATION

The disclosure claims priority to earlier application No. 201610429032.2, filed on June 16, 2016 and entitled "audio stream processing method and mobile terminal", the content of which is hereby incorporated by reference in its entirety.

### TECHNICAL FIELD

The disclosure relates to the technical field of mobile terminals, and more particularly to an audio stream processing method and a related device.

### BACKGROUND

An audio playing function is one of basic functions of a mobile terminal such as a smart phone, a tablet computer and a voice recorder, and this function is needed whenever a user makes a call, listens to the music and watches a video.

At present, there have been many applications integrated with the audio playing function, for example, a music player such as the TTPod and a video player such as the Storm. A third-party application, which is installed in a mobile terminal under control of a user, may usually have a sound effect setting function, that is, the user may preset a sound effect mode for a corresponding application through a control interface in the corresponding application and, in a subsequent usage process, the mobile terminal may superimpose the sound effect mode set by the user and a global sound effect mode of the mobile terminal and play an audio in a superimposed sound effect mode.

### SUMMARY

Embodiments of the disclosure provide an audio stream processing method and a related device, so as to improve intelligence of sound effect mode setting during playing of an audio stream in the mobile terminal, avoid superimposing of multiple sound effects and improve the user experience.

According to a first aspect, the embodiments of the disclosure provide an audio stream processing method, which may include the operationsof obtaining a playing control instruction for an audio stream, the playing control instruction being used to instruct a target application of a mobile terminal to play the audio stream; determining whether the mobile terminal has created an application-layer sound effect instance corresponding to the target application; when it is determined that the mobile terminal has created the application-layer sound effect instance corresponding to the target application, configuring an application-layer sound effect parameter for the audio stream with the application-layer sound effect instance, and playing the audio stream configured with the application-layer sound effect parameter; and when it is determined that no application-layer sound effect instance corresponding to the target application has been created by the mobile terminal, configuring a global sound effect parameter for the audio stream with a pre-stored global sound effect instance, and playing the audio stream configured with the global sound effect parameter.

According to a second aspect, the embodiments of the disclosure provide an audio stream processing device, which includes functional modules, wherein the functional modules are arranged to execute part or all of the operations described in any method according to the first aspect of the embodiments of the disclosure.

According to a third aspect, the embodiments of the disclosure provide a mobile terminal, which may include a processor, a memory, a communication interface and a communication bus, wherein the processor, the memory and the communication interface may be connected through the communication bus and perform mutual communication; the memory may store an executable program code, and the communication interface may be configured for wireless communication; and the processor may be arranged to call the executable program code in the memory to execute part or all of the operations described in any method according to the first aspect of the embodiments of the disclosure.

### BRIEF DESCRIPTION OF DRAWINGS

In order to describe the technical solutions in the embodiments of the disclosure or a conventional art more clearly, the drawings required to be used in descriptions about the embodiments or the conventional art will be simply introduced below. Obviously, the drawings in the following descriptions are only some embodiments of the disclosure. Those of ordinary skilled in the art may further obtain other drawings according to these drawings without creative work.
FIG. 1 illustrates a flowchart of an audio stream processing method according to some embodiments of the disclosure.
FIG. 2 illustrates a flowchart of another audio stream processing method according to some embodiments of the disclosure.
FIG. 3 illustrates a flowchart of another audio stream processing method according to some embodiments of the disclosure.
FIG. 4 illustrates a composition block diagram of units of an audio stream processing device according to some embodiments of the disclosure.
FIG. 5 illustrates a structure diagram of a mobile terminal according to some embodiments of the disclosure.
FIG. 6 illustrates a structure diagram of another mobile terminal according to some embodiments of the disclosure.

### DETAILED DESCRIPTION

In order to make the solutions of the disclosure better understood by those skilled in the art, the technical solutions in the embodiments of the disclosure will be clearly and completely described below in combination with the drawings in the embodiments of the disclosure. Obviously, the described embodiments are not all embodiments but part of embodiments of the disclosure. All other embodiments obtained by those of ordinary skilled in the art on the basis of the embodiments in the disclosure without creative work shall fall within the scope of protection of the disclosure.

Terms "first", "second" and the like in the specification, claims and drawings of the disclosure are adopted not to describe a specific sequence but to distinguish similar objects. In addition, terms "include" and "have" and any transformation thereof are intended to cover nonexclusive inclusions. For example, a process, method, system, product or device including a series of operations or units is not limited to the operations or units which are listed, but may Alternatively further include operations or units which are not listed or Alternatively further include other operations or units intrinsic to the process, the method, the product or the device.

"Embodiment" mentioned in the disclosure means that a specific characteristic, structure or property described in combination with the embodiment may be included in at least one embodiment of the disclosure. Appearance of this phrase at each position in the specification may not always mean the same embodiment as well as an independent or alternative embodiment mutually exclusive with the other embodiments. Those skilled in the art explicitly and implicitly understand that the embodiments described in the disclosure may be combined with the other embodiments.

In order to better understand the audio stream processing method and the mobile terminal disclosed by the embodiments of the disclosure, the embodiments of the disclosure will be introduced below in detail.

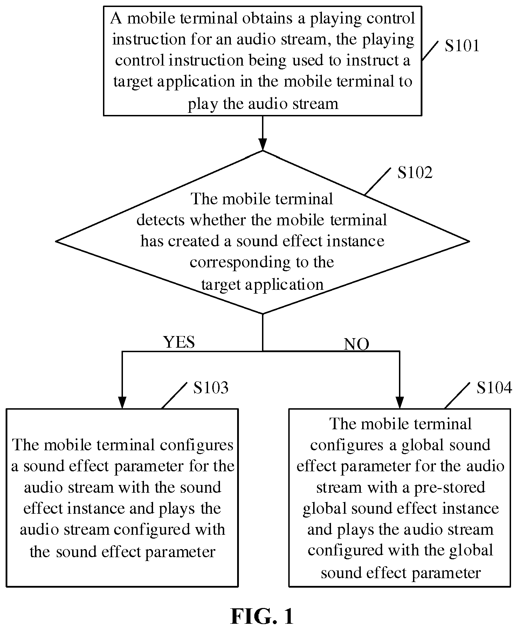

FIG. 1 illustrates an audio stream processing method according to some embodiments of the disclosure. As illustrated in FIG. 1, the audio stream processing method includes the following operations.

In S101, a mobile terminal obtains a playing control instruction for an audio stream. The playing control instruction is used to instruct a target application in the mobile terminal to play the audio stream.

The playing control instruction may be, for example, generated by the mobile terminal upon detection of a playing selection operation of a user for the audio stream of the target application. The playing selection operation may be, for example, a touch operation and a voice control operation. The audio stream may be, for example, a prompt tone, a background sound, a song and a communication voice. The target application may be, for example, a system player of the mobile terminal or a third-party player or another audio-video playing plugin.

In some embodiments of the disclosure, the mobile terminal may obtain the playing control instruction for the audio stream in the following manner.

Upon detection of a first selection operation for the audio stream in the mobile terminal, the mobile terminal outputs a player selection interface including the target application.

Upon detection of a second selection operation for the target application in the player selection interface, the mobile terminal generates the playing control instruction for the audio stream.

The mobile terminal obtains the playing control instruction.

The first selection operation and the second selection operation may be, for example, touch operations.

In S102, the mobile terminal determines whether the mobile terminal has created an application-layer sound effect instance corresponding to the target application.

If the result of the determination in S102 is YES, i.e., it is determined that the mobile terminal has created the application-layer sound effect instance corresponding to the target application, S103 is executed.

If the result of the determination in S102 is NO, i.e., it is determined that no application-layer sound effect instance corresponding to the target application has been created by the mobile terminal, S104 is executed.

The sound effect instance is a sound effect object generated by the mobile terminal in a memory through a sound effect class framework of the mobile terminal, and the sound effect object is arranged to configure a corresponding sound effect parameter for the audio stream. For example, a global sound effect instance may configure a global sound effect parameter for any audio stream in the mobile terminal, and the application-layer sound effect parameter is arranged to configure the application-layer sound effect parameter for the audio stream played through the application. The sound effect class framework is a basic strategy for generating a sound effect instance in an operating system of the mobile terminal, generation of the sound effect object by the sound effect class framework in the memory is similar to production of an automobile by an automobile manufacturer according to an automobile architecture diagram, and the sound effect object is similar to the produced automobile; and a specific function of the sound effect object is to configure the corresponding sound effect parameter for the audio stream, wherein the global sound effect parameter or the application-layer sound effect parameter includes at least one of the following parameters: a Compress parameter, an Amp-Type parameter, an EQ_Bass parameter, an EQ_Mid parameter, an EQ_Treble parameter and a Noise_Gate parameter.

In S103, the mobile terminal configures an application-layer sound effect parameter for the audio stream with the application-layer sound effect instance and plays the audio stream configured with the application-layer sound effect parameter.

In S104, the mobile terminal configures a global sound effect parameter for the audio stream with a pre-stored global sound effect instance and plays the audio stream configured with the global sound effect parameter.

It can be seen that, compared with an existing solution in which the mobile terminal superimposes a global sound effect and a user-preset sound effect as a default, in the audio stream processing method provided by the embodiment of the disclosure, it is determined whether the mobile terminal has created the application-layer sound effect instance corresponding to the target application after obtaining the playing control instruction for the audio stream; if YES, the application-layer sound effect parameter is configured for the audio stream with the application-layer sound effect instance, and the audio stream configured with the application-layer sound effect parameter is played; and if NO, the global sound effect parameter is configured for the audio stream through the pre-stored global sound effect instance, and the audio stream configured with the global sound effect parameter is played. As can be seen, the mobile terminal may conveniently configure the sound effect parameter for the audio stream of the target application according to the sound effect instance, thereby facilitating improvement of intelligence of the sound effect mode setting during playing of the audio stream in the mobile terminal, avoiding superimposing of multiple sound effects and improving user experiences.

Alternatively, in some embodiments of the disclosure, after the operation of the mobile terminal's obtaining the playing control instruction for the audio stream and before the operation of determining whether the mobile terminal has created the application-layer sound effect instance corresponding to the target application, the following operations may further be executed.

The mobile terminal determines an application-layer sound effect parameter associated with the target application is pre-stored in the mobile terminal.

If YES, the mobile terminal creates the application-layer sound effect instance through a sound effect class framework of the mobile terminal. The application-layer sound effect instance includes the application-layer sound effect parameter and indication information about configuration of the application-layer sound effect parameter.

Alternatively, in some embodiments of the disclosure, before the operation of the mobile terminal's obtaining the playing control instruction for the audio stream, the following operations may further be executed.

When the mobile terminal launches the target application, the mobile terminal determines whether the application-layer sound effect parameter associated with the target application is pre-stored in the mobile terminal.

If YES, the mobile terminal creates the application-layer sound effect instance through the sound effect class framework of the mobile terminal. The application-layer sound effect instance includes the application-layer sound effect parameter and the indication information about configuration of the application-layer sound effect parameter.

Alternatively, in some embodiments of the disclosure, before the operation of the mobile terminal's obtaining the playing control instruction for the audio stream, the following operation may further be executed.

When the mobile terminal is powered on, the global sound effect instance is generated through the sound effect class framework of the mobile terminal. The global sound effect instance includes the global sound effect parameter and indication information about configuration of the global sound effect parameter.

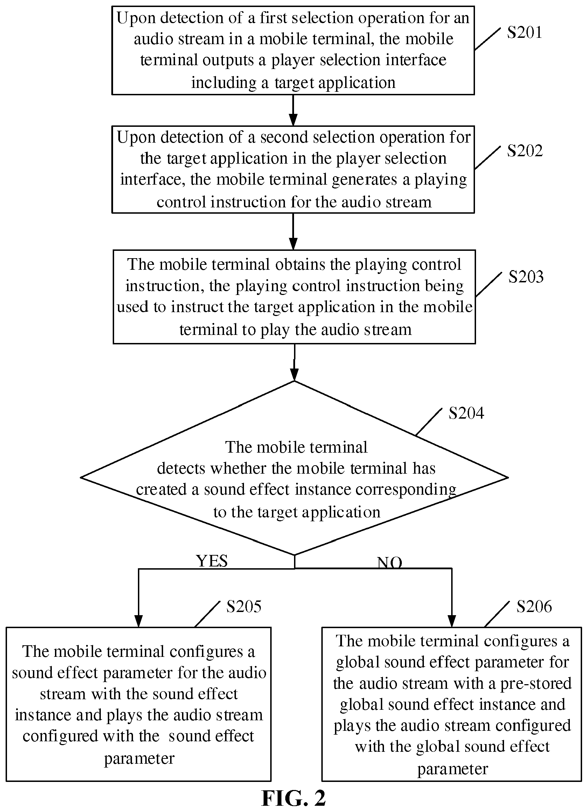

Consistent with the embodiment illustrated in FIG. 1, FIG. 2 illustrates a flowchart of another audio stream processing method according to some embodiments of the disclosure. As illustrated in FIG. 2, the audio stream processing method includes the following operations.

In S201, upon detection of a first selection operation for an audio stream in a mobile terminal, the mobile terminal outputs a player selection interface including a target application.

In S202, upon detection of a second selection operation for the target application in the player selection interface, the mobile terminal generates a playing control instruction for the audio stream.

In S203, the mobile terminal obtains the playing control instruction. The playing control instruction is used to instruct the target application in the mobile terminal to play the audio stream.

In S204, the mobile terminal determines whether the mobile terminal has created an application-layer sound effect instance corresponding to the target application.

If the result of the determination in S2014 is YES, S205 is executed.

If the result of the determination in S2014 is NO, S206 is executed.

In S205, the mobile terminal configures an application-layer sound effect parameter for the audio stream with the application-layer sound effect instance and plays the audio stream configured with the application-layer sound effect parameter.

In S206, the mobile terminal configures a global sound effect parameter for the audio stream with a pre-stored global sound effect instance and plays the audio stream configured with the global sound effect parameter.

It can be seen that, compared with an existing solution in which the mobile terminal superimposes a global sound effect and a user-preset sound effect as a default, in the audio stream processing method provided by the embodiment of the disclosure, it is determined whether the mobile terminal has created the application-layer sound effect instance corresponding to the target application after obtaining the playing control instruction for the audio stream; if YES, the application-layer sound effect parameter is configured for the audio stream with the application-layer sound effect instance, and the audio stream configured with the application-layer sound effect parameter is played; and if NO, the global sound effect parameter is configured for the audio stream with the pre-stored global sound effect instance, and the audio stream configured with the global sound effect parameter is played. As can be seen, the mobile terminal may conveniently configure the sound effect parameter for the audio stream of the target application according to the sound effect instance, thereby facilitating improvement of intelligence of the sound effect mode setting during playing of the audio stream in the mobile terminal, avoiding superimposing of multiple sound effects and improving user experiences.

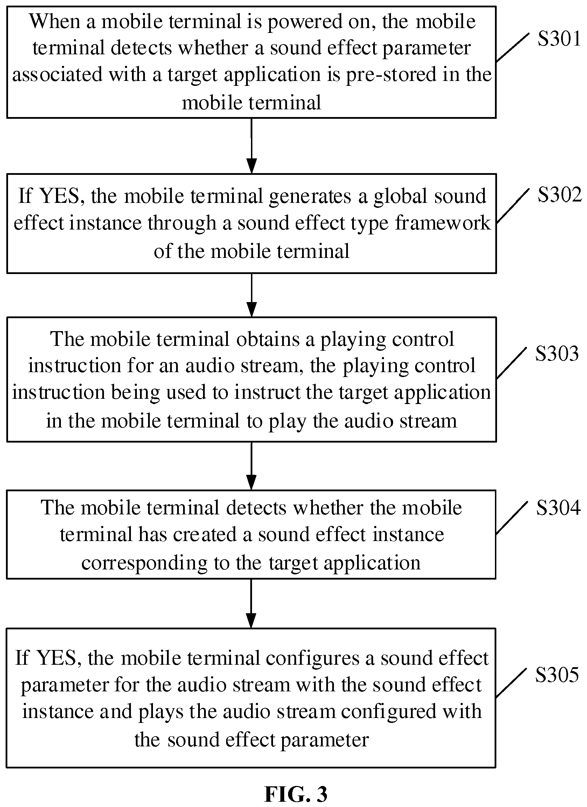

Consistent with the embodiments illustrated in FIG. 1 and FIG. 2, FIG. 3 illustrates a flowchart of another audio stream processing method according to some embodiments of the disclosure. As illustrated in the figure, the audio stream processing method includes the following operations.

In S301, when a mobile terminal is powered on, the mobile terminal determines whether an application-layer sound effect parameter associated with a target application is pre-stored in the mobile terminal.

In S302, if YES, the mobile terminal generates a global sound effect instance through a sound effect class framework of the mobile terminal. The global sound effect instance includes a global sound effect parameter and indication information about configuration of the global sound effect parameter.

In S303, the mobile terminal obtains a playing control instruction for an audio stream. The playing control instruction is used to instruct the target application in the mobile terminal to play the audio stream.

In S304, the mobile terminal determines whether the mobile terminal has created an application-layer sound effect instance corresponding to the target application.

In S305, if YES, the mobile terminal configures an application-layer sound effect parameter for the audio stream with the application-layer sound effect instance and plays the audio stream configured with the application-layer sound effect parameter.

It can be seen that, compared with an existing solution in which the mobile terminal superimposes a global sound effect and a user-preset sound effect as a default, in the audio stream processing method provided by the embodiment of the disclosure, it is determined whether the mobile terminal has created the application-layer sound effect instance corresponding to the target application after obtaining the playing control instruction for the audio stream; if YES, the application-layer sound effect parameter is configured for the audio stream with the application-layer sound effect instance, and the audio stream configured with the application-layer sound effect parameter is played; and if NO, the global sound effect parameter is configured for the audio stream with the pre-stored global sound effect instance, and the audio stream configured with the global sound effect parameter is played. As can be seen, the mobile terminal may conveniently configure the sound effect parameter for the audio stream of the target application according to the sound effect instance, thereby facilitating improvement of intelligence of the sound effect mode setting during playing of the audio stream in the mobile terminal, avoiding superimposing of multiple sound effects and improving a user experience.

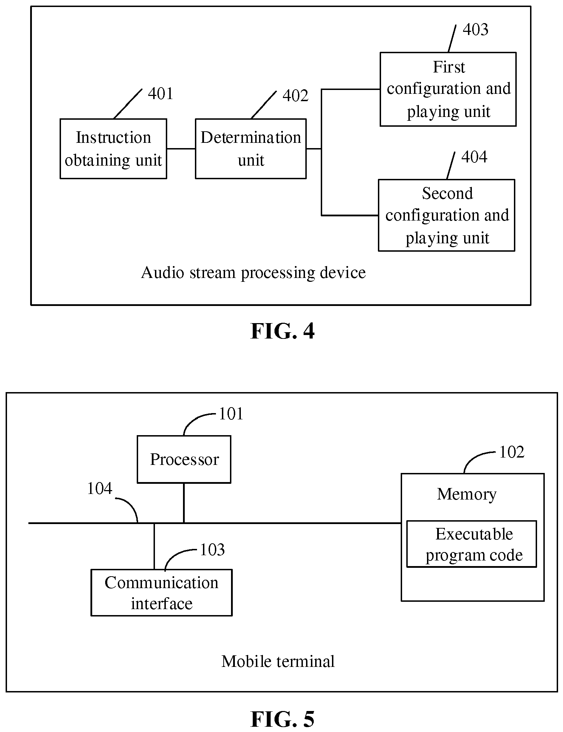

The below is a device embodiment of the disclosure. The device embodiment of the disclosure is used for executing the method implemented by the method embodiment of the disclosure. As illustrated in FIG. 4, a mobile terminal may include an instruction obtaining unit 401, a determination unit 402, a first configuration and playing unit 403 and a second configuration and playing unit 404.

The instruction acquisition unit 401 is arranged to obtain a playing control instruction for an audio stream. The playing control instruction is used to instruct a target application in the mobile terminal to play the audio stream.

The determination unit 402 is arranged to determine whether the mobile terminal has created an application-layer sound effect instance corresponding to the target application.

The first configuration and playing unit 403 is arranged to, if YES, configure an application-layer sound effect parameter for the audio stream with the application-layer sound effect instance and play the audio stream configured with the application-layer sound effect parameter.

The second configuration and playing unit 404 is arranged to, if NO, configure a global sound effect parameter for the audio stream with a pre-stored global sound effect instance and play the audio stream configured with the global sound effect parameter.

Alternatively, the determination unit 402 is further arranged to, after the instruction acquisition unit obtains the playing control instruction for the audio stream and before the determination unit determines whether the mobile terminal has created the application-layer sound effect instance corresponding to the target application, determine whether the mobile terminal pre-stores the application-layer sound effect parameter associated with the target application.

The audio stream processing device may further include a first instance generation unit, arranged to, when the determination unit 402 determines that the application-layer sound effect parameter associated with the target application is preset, create the application-layer sound effect instance through a sound effect class framework of the mobile terminal, the application-layer sound effect instance including the application-layer sound effect parameter and indication information about configuration of the application-layer sound effect parameter.

Alternatively, the determination unit 402 is further arranged to, before the instruction acquisition unit obtains the playing control instruction for the audio stream, when the mobile terminal launches the target application, determine whether the application-layer sound effect parameter associated with the target application is pre-stored in the mobile terminal.

The audio stream processing device further includes a second instance generation unit, arranged to, when the determination unit 402 determines that the application-layer sound effect parameter associated with the target application is preset, create the application-layer sound effect instance through the sound effect class framework of the mobile terminal, the application-layer sound effect instance including the application-layer sound effect parameter and the indication information about configuration of the application-layer sound effect parameter.

Alternatively, the audio stream processing device further includes a third instance generation unit, arranged to, before the instruction acquisition unit obtains the playing control instruction for the audio stream, when the mobile terminal is powered on, generate the global sound effect instance through the sound effect class framework of the mobile terminal, the global sound effect instance including the global sound effect parameter and indication information about configuration of the global sound effect parameter.

Alternatively, the instruction acquisition unit 401 is arranged to: upon detection of a first selection operation for the audio stream in the mobile terminal, output a player selection interface including the target application; upon detection of a second selection operation for the target application in the player selection interface, generate the playing control instruction for the audio stream; and obtain the playing control instruction.

Alternatively, the global sound effect parameter or the application-layer sound effect parameter includes at least one of the following parameters: a Compress parameter, an Amp-Type parameter, an EQ_Bass parameter, an EQ_Mid parameter, an EQ_Treble parameter and a Noise_Gate parameter.

It is to be noted that the audio stream processing device described in the device embodiment of the disclosure is presented in form of functional units. Term "unit" used herein should be understood as a meaning which is as broad as possible and an object arranged to realize a described function of each "unit" may be, for example, an Application Specific Integrated Circuit (ASIC), a single circuit, a processor (shared, dedicated or chip unit) and memory arranged to execute one or more software or firmware programs, a combined logical circuit and/or another proper component realizing the function.

For example, the playing control instruction acquisition function of the instruction acquisition unit 402 may be realized by a mobile terminal illustrated in FIG. 5, and specifically, a processor 101 may call an executable program code in a memory 102 to obtain the playing control instruction for the audio stream.

It can be seen that, compared with an existing solution in which the mobile terminal superimposes a global sound effect and a user-preset sound effect as a default, in the audio stream processing method provided by the embodiment of the disclosure, it is determined whether the mobile terminal has created the application-layer sound effect instance corresponding to the target application after obtaining the playing control instruction for the audio stream; if YES, the application-layer sound effect parameter is configured for the audio stream with the application-layer sound effect instance, and the audio stream configured with the application-layer sound effect parameter is played; and if NO, the global sound effect parameter is configured for the audio stream with the pre-stored global sound effect instance, and the audio stream configured with the global sound effect parameter is played. As can be seen, the mobile terminal may conveniently configure the sound effect parameter for the audio stream of the target application according to the sound effect instance, thereby facilitating improvement of intelligence of the sound effect mode setting during playing of the audio stream in the mobile terminal, avoiding superimposing of multiple sound effects and improving a user experience.

Some embodiments of the disclosure further provide another mobile terminal, which, as illustrated in FIG. 5, includes: a processor 101, a memory 102, a communication interface 103 and a communication bus 104. The processor 101, the memory 102 and the communication interface 103 are connected through the communication bus 104 and perform mutual communication. The processor 101 controls wireless communication with an external cellular network through the communication interface 103. The communication interface 103 includes, but not limited to, an antenna, an amplifier, a transceiver, a coupler, a Low Noise Amplifier (LNA), a duplexer and the like. The memory 102 includes at least one of: a Random Access Memory (RAM), a non-volatile memory and an external memory. An executable program code is stored in the memory 102, and the executable program code may guide the processor 101 to execute an audio stream processing method specifically disclosed in the method embodiment of the disclosure, including the following operations.

The processor 101 obtains a playing control instruction for an audio stream. The playing control instruction is used to instruct a target application in the mobile terminal to play the audio stream.

The processor 101 determines whether the mobile terminal has created an application-layer sound effect instance corresponding to the target application.

If YES, the processor 101 configures an application-layer sound effect parameter for the audio stream with the application-layer sound effect instance and plays the audio stream configured with the application-layer sound effect parameter.

If NO, the processor 101 configures a global sound effect parameter for the audio stream with a pre-stored global sound effect instance and plays the audio stream configured with the global sound effect parameter.

It can be seen that, compared with an existing solution in which the mobile terminal superimposes a global sound effect and a user-preset sound effect as a default, in the audio stream processing method provided by the embodiment of the disclosure, it is determined whether the mobile terminal has created the application-layer sound effect instance corresponding to the target application after obtaining the playing control instruction for the audio stream; if YES, the application-layer sound effect parameter is configured for the audio stream with the application-layer sound effect instance, and the audio stream configured with the application-layer sound effect parameter is played; and if NO, the global sound effect parameter is configured for the audio stream through the pre-stored global sound effect instance, and the audio stream configured with the global sound effect parameter is played. As can be seen, the mobile terminal may conveniently configure the sound effect parameter for the audio stream of the target application according to the sound effect instance, thereby facilitating improvement of intelligence for sound effect mode setting during playing of the audio stream in the mobile terminal, avoiding superimposing of multiple sound effects and improving a user experience.

In addition, the executable program code stored in the memory 102 is further arranged to execute the related operations of the audio stream processing methods illustrated in FIG. 1, FIG. 2 and FIG. 3, for example, executing the operations of configuring the application-layer sound effect parameter for the audio stream with the application-layer sound effect instance and playing the audio stream configured with the application-layer sound effect parameter.

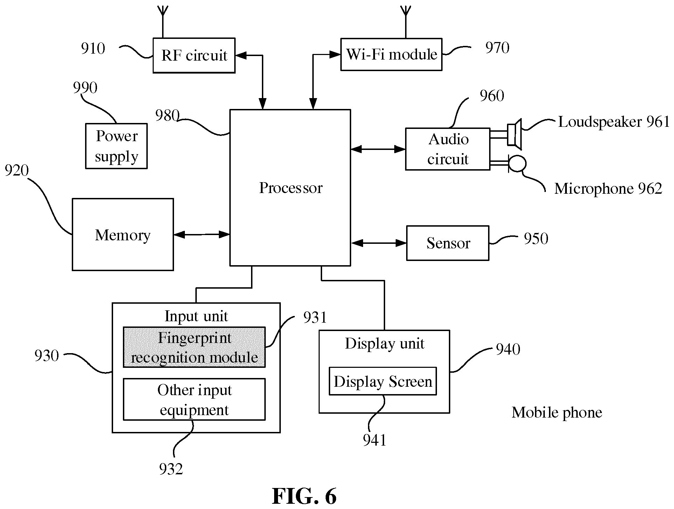

Some embodiments of the disclosure further provide another mobile terminal. As illustrated in FIG. 6, for convenient description, only parts related to the embodiment of the disclosure are illustrated, and specific technical details which are undisclosed may be seen from parts of the method of the embodiments of the disclosure. The mobile terminal may be any terminal device including a mobile phone, a tablet computer, a Personal Digital Assistant (PDA), a Point of Sales (POS), a vehicle-mounted computer and the like. For example, the mobile terminal may be a mobile phone.

FIG. 6 illustrates a block diagram of part of a structure of a mobile phone related to a mobile terminal according to some embodiments of the disclosure. As illustrated in FIG. 6, the mobile phone includes components such as a Radio Frequency (RF) circuit 910, a memory 920, an input unit 930, a display unit 940, a sensor 950, an audio circuit 960, a Wireless Fidelity (Wi-Fi) module 970, a processor 980 and a power supply 990. Those skilled in the art should know that the structure of the mobile phone illustrated in FIG. 6 is not intended to limit the mobile phone and may include more or fewer components than those illustrated in the figure, or some components may be combined, or different component arrangements may be used.

Each component of the mobile phone will be specifically introduced below in combination with FIG. 6.

The RF circuit 910 may be arranged to receive and send information. The RF circuit 910 usually includes, but not limited to, an antenna, at least one amplifier, a transceiver, a coupler, an LNA, a duplexer and the like. In addition, the RF circuit 910 may also communicate with a network and other device in a wireless communication manner. Any communication standard or protocol may be used for wireless communication, including, but not limited to, a Global System of Mobile communication (GSM), General Packet Radio Service (GPRS), Code Division Multiple Access (CDMA), Wideband Code Division Multiple Access (WCDMA), Long Term Evolution (LTE), an electronic mail, Short Messaging Service (SMS) and the like.

The memory 920 may be arranged to store a software program and a module, and the processor 980 operates the software program and module stored in the memory 920, thereby executing various function applications and data processing of the mobile phone. The memory 920 may mainly include a program storage region and a data storage region. An operating system, an application program required by at least one function (for example, a control instruction acquisition function and an audio stream playing function) and the like may be stored in the program storage region, and data (for example, a global sound effect instance, a global sound effect parameter, an application-layer sound effect instance and an application-layer sound effect parameter) created according to use of the mobile phone and the like may be stored in the data storage region. In addition, the memory 920 may include a highspeed RAM, and may further include a non-volatile memory, for example, at least one disk storage device, flash memory device or other volatile solid-state storage device.

The input unit 930 may be arranged to receive input digital or character information and generate key signal input related to user setting and function control of the mobile phone. Specifically, the input unit 930 may include a fingerprint recognition module 931 and other input device 932. The fingerprint recognition module 931 may collect fingerprint data of a user thereon. Alternatively, the fingerprint recognition module 931 may include an optical fingerprint module, a capacitive fingerprint module and an RF fingerprint module. For example, the fingerprint recognition module 931 is a capacitive fingerprint recognition module including a sensing electrode (abnormity sensing electrode and normality sensing electrode) and a signal processing circuit (for example, an amplification circuit, a noise suppression circuit and an analogue-to-digital conversion circuit) connected with the sensing electrode. Besides the fingerprint recognition module 931, the input unit 930 may further include the other input device 932. Specifically, the other input device 932 may include, but not limited to, one or more of a physical keyboard, a function key (for example, a volume control key and an on-off key), a trackball, a mouse, a joystick and the like.

The display unit 940 may be arranged to display information input by the user or information provided for the user and various menus of the mobile phone. The display unit 940 may include a display screen 941. Alternatively, the display screen 941 may be configured in form of a Liquid Crystal Display (LCD), an Organic Light-Emitting Diode (OLED) and the like. Although the fingerprint recognition module 931 and display screen 941 in FIG. 6 realize input and output functions of the mobile phone as two independent components, the fingerprint recognition module 931 and the display screen 941 may be integrated to realize the input and output functions of the mobile phone in some embodiments.

The mobile phone may further include at least one sensor 950, for example, a light sensor, a motion sensor and another sensor. Specifically, the light sensor may include an environmental light sensor and a proximity sensor, wherein the environmental light sensor may regulate brightness of the display screen 941 according to brightness of environmental light, and the proximity sensor may turn off the display screen 941 and/or backlight when the mobile phone is moved to an ear. As a motion sensor, an accelerometer sensor may detect a magnitude of an acceleration in each direction (usually three axes), may detect a magnitude and direction of the gravity under a motionless condition, and may be configured for an application recognizing a posture of the mobile phone (for example, landscape and portrait switching, a related game and magnetometer posture calibration), a vibration recognition related function and the like (for example, a pedometer and knocking). Other sensors, for example, a gyroscope, a barometer, a hygrometer, a thermometer and an infrared sensor, which may be configured in the mobile phone will not be elaborated herein.

The audio circuit 960, a loudspeaker 961 and a microphone 962 may provide an audio interface between the user and the mobile phone. The audio circuit 960 may transmit an electric signal converted from received audio data to the loudspeaker 961, and then the loudspeaker 961 converts it into a sound signal for output. On the other aspect, the microphone 962 converts a collected sound signal into an electric signal, and then the audio circuit 960 receives and converts it into audio data and outputs the audio data to the processor 980 for processing and sending to, for example, another mobile phone through the RF circuit 910 or outputs the audio data to the memory 920 for further processing.

Wi-Fi is a short-distance wireless communication technology. The mobile phone may help the user to receive and send an electronic mail, browse a webpage, access streaming media and the like through the Wi-Fi module 970, and provides wireless broadband Internet access for the user. Although the Wi-Fi module 970 is illustrated in FIG. 6, it can be understood that it is not a necessary component of the mobile phone and may completely be omitted according to a requirement without changing the scope of the essence of the disclosure.

The processor 980 is a control center of the mobile phone, connects each part of the whole mobile phone by virtue of various interfaces and lines and executes various functions and data processing of the mobile phone by operating or executing the software program and/or module stored in the memory 920 and calling data stored in the memory 920, thereby monitoring the whole mobile phone. Alternatively, the processor 980 may include one or more processing units. Preferably, the processor 980 may integrate an application processor and a modulation and demodulation processor, wherein the application processor mainly processes the operating system, a user interface, an application program and the like, and the modulation and demodulation processor mainly processes wireless communication. It can be understood that the modulation and demodulation processor may also not be integrated into the processor 980.

The mobile phone further includes the power supply 990 (for example, a battery) supplying power to each component. Preferably, the power supply may be logically connected with the processor 980 through a power management system, thereby realizing functions of charging and discharging management, power consumption management and the like through the power management system.

Although not illustrated in the figure, the mobile phone may further include a camera, a Bluetooth module and the like, which will not be elaborated herein.

In the embodiments illustrated in FIG. 1, FIG. 2 and FIG. 3, each operation of the method flows may be implemented on the basis of the structure of the mobile phone.

In the embodiment illustrated in FIG. 4, the function of each unit may be realized on the basis of the structure of the mobile phone.

Some embodiments of the disclosure further provide a computer storage medium. The computer storage medium may store a program, and when the program is executed, part or all of the operations of any audio stream processing method recorded in the method embodiment are included.

It is to be noted that, for simple description, each method embodiment is expressed into a combination of a series of actions. However, those skilled in the art should know that the disclosure is not limited by an action sequence described herein because some operations may be executed in another sequence or at the same time according to the disclosure. Second, those skilled in the art should also know that the embodiments described in the specification all belong to preferred embodiments and involved actions and modules are not always necessary to the disclosure.

Each embodiment in the abovementioned embodiments is described with different emphases, and undetailed parts in a certain embodiment may be seen from related descriptions in the other embodiments.

In some embodiments provided by the application, it should be understood that the disclosed device may be implemented in another manner. For example, the device embodiment described above is only schematic, and for example, division of the units is only logical function division, and other division manners may be adopted during practical implementation. For example, multiple units or components may be combined or integrated into another system, or some characteristics may be neglected executed. In addition, coupling or direct coupling or communication connection between each displayed or discussed component may be indirect coupling or communication connection, implemented through some interfaces, of the device or the units, and may be electrical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit. The integrated unit may be implemented in a hardware form and may also be implemented in form of software functional unit.

When being implemented in form of software functional unit and sold or used as an independent product, the integrated unit may be stored in a computer-readable memory. Based on such an understanding, the technical solutions of the disclosure substantially or parts making contributions to the conventional art or all or part of the technical solutions may be embodied in form of software product, and the computer software product is stored in a memory, including a plurality of instructions arranged to enable a piece of computer device (which may be a personal computer, a server, network device or the like) to execute all or part of the operations of the method in each embodiment of the disclosure. The memory includes: various media capable of storing program codes such as a U disk, a Read-Only Memory (ROM), a RAM, a mobile hard disk, a magnetic disk or an optical disk.

Those of ordinary skilled in the art can understand that all or part of the operations in various methods of the embodiments may be completed by related hardware instructed by a program, the program may be stored in a computer-readable memory, and the memory may include a flash disk, a ROM, a RAM, a magnetic disk, an optical disk or the like.

The embodiments of the application are introduced above in detail, the principle and implementation modes of the disclosure are elaborated with specific examples in the disclosure, and the descriptions made to the embodiments are only adopted to help the method of the disclosure and the core concept thereof to be understood. In addition, those of ordinary skilled in the art may make variations to the specific implementation modes and the application scope according to the concept of the disclosure. From the above, the contents of the specification should not be understood as limits to the disclosure.

## Claims

1. An audio stream processing method, comprising:
obtaining a playing control instruction for an audio stream, wherein the playing control instruction is used to instruct a target application in a mobile terminal to play the audio stream;
determining whether the mobile terminal has created an application-layer sound effect instance corresponding to the target application; and
when it is determined that the mobile terminal has created the application-layer sound effect instance corresponding to the target application, configuring an application-layer sound effect parameter for the audio stream with the application-layer sound effect instance, and playing the audio stream configured with the application-layer sound effect parameter.

2. The method according to claim 1, further comprising:
when it is determined that no application-layer sound effect instance corresponding to the target application has been created by the mobile terminal, configuring a global sound effect parameter for the audio stream with a pre-stored global sound effect instance, and playing the audio stream configured with the global sound effect parameter.

3. The method according to claim 2, wherein after obtaining the playing control instruction for the audio stream and before determining whether the mobile terminal has created the application-layer sound effect instance corresponding to the target application, the method further comprises:
determining whether an application-layer sound effect parameter corresponding to the target application is pre-stored in the mobile terminal; and
when it is determined that the application-layer sound effect parameter associated with the target application is pre-stored in the mobile terminal, creating the application-layer sound effect instance through a sound effect class framework of the mobile terminal, wherein the application-layer sound effect instance comprises the application-layer sound effect parameter and indication information about configuration of the application-layer sound effect parameter.

4. The method according to claim 2, wherein before obtaining the playing control instruction for the audio stream, the method further comprises:
when the mobile terminal launches the target application, determining whether an application-layer sound effect parameter associated with the target application is pre-stored in the mobile terminal; and
when it is determined that the application-layer sound effect parameter associated with the target application is pre-stored in the mobile terminal, creating the application-layer sound effect instance through the sound effect class framework of the mobile terminal, wherein the application-layer sound effect instance comprises the application-layer sound effect parameter and the indication information about configuration of the application-layer sound effect parameter.

5. The method according to any one of claims 2-4, wherein before obtaining the playing control instruction for the audio stream, the method further comprises:
when the mobile terminal is powered on, generating the global sound effect instance through the sound effect class framework of the mobile terminal, wherein the global sound effect instance comprises the global sound effect parameter and indication information about configuration of the global sound effect parameter.

6. The method according to any one of claims 2-5, wherein obtaining the playing control instruction for the audio stream comprises:
upon detection of a first selection operation for the audio stream in the mobile terminal, outputting a player selection interface comprising the target application;
upon detection of a second selection operation for the target application in the player selection interface, generating the playing control instruction for the audio stream; and
obtaining the playing control instruction.

7. The method according to any one of claims 2-6, wherein the global sound effect parameter or the application-layer sound effect parameter comprises at least one of the following parameters:
a Compress parameter, an Amp-Type parameter, an EQ Bass parameter, an EQ_Mid parameter, an EQ_Treble parameter, or a Noise_Gate parameter.

8. The method according to claim 7, wherein the target application is a system player of the mobile terminal or a third-party player or another audio-video playing plugin.

9. The method according to claim 8, wherein the playing selection operation is a touch operation or a voice control operation.

10. An audio stream processing device, comprising:
an instruction acquisition unit, arranged to obtain a playing control instruction for an audio stream, wherein the playing control instruction is used to instruct a target application of a mobile terminal to play the audio stream;
a determination unit, arranged to determine whether the mobile terminal has created an application-layer sound effect instance corresponding to the target application; and
a first configuration and playing unit, arranged to, when it is determined that the mobile terminal has created the application-layer sound effect instance corresponding to the target application, configure an application-layer sound effect parameter for the audio stream with the application-layer sound effect instance and play the audio stream configured with the application-layer sound effect parameter.

11. The device according to claim 10, further comprising:
a second configuration and playing unit, arranged to, when it is determined that no application-layer sound effect instance corresponding to the target application has been created by the mobile terminal, configure a global sound effect parameter for the audio stream with a pre-stored global sound effect instance and play the audio stream configured with the global sound effect parameter.

12. The device according to claim 11, wherein the determination unit is further arranged to, after the instruction acquisition unit obtains the playing control instruction for the audio stream and before the determination unit determines whether the mobile terminal has created the application-layer sound effect instance corresponding to the target application, determine whether an application-layer sound effect parameter associated with the target application is pre-stored in the mobile terminal; and
wherein the audio stream processing device further comprises a first instance generation unit, arranged to, when the determination unit determines that the application-layer sound effect parameter associated with the target application is preset, create the application-layer sound effect instance through a sound effect class framework of the mobile terminal, wherein the application-layer sound effect instance comprises the application-layer sound effect parameter and indication information about configuration of the application-layer sound effect parameter.

13. The device according to claim 11, wherein the determination unit is further arranged to, before the instruction acquisition unit obtains the playing control instruction for the audio stream, when the mobile terminal launches the target application, determine whether an application-layer sound effect parameter associated with the target application is pre-stored in the mobile terminal; and
wherein the audio stream processing device further comprises a second instance generation unit, arranged to, when the determination unit determines that the application-layer sound effect parameter associated with the target application is preset, create the application-layer sound effect instance through the sound effect class framework of the mobile terminal, wherein the application-layer sound effect instance comprises the application-layer sound effect parameter and the indication information about configuration of the application-layer sound effect parameter.

14. The device according to any one of claims 11-13, further comprising:
a third instance generation unit, arranged to, before the instruction acquisition unit obtains the playing control instruction for the audio stream, when the mobile terminal is powered on, generate the global sound effect instance through the sound effect class framework of the mobile terminal, wherein the global sound effect instance comprises the global sound effect parameter and indication information about configuration of the global sound effect parameter.

15. The device according to any one of claims 11-14, wherein the instruction acquisition unit is arranged to:
upon detection of a first selection operation for the audio stream in the mobile terminal, output a player selection interface comprising the target application;
upon detection of a second selection operation for the target application in the player selection interface, generate the playing control instruction for the audio stream; and
obtain the playing control instruction.

16. The device according to any one of claims 11-15, wherein the global sound effect parameter or the application-layer sound effect parameter comprises at least one of the following parameters:
a Compress parameter, an Amp-Type parameter, an EQ_Bass parameter, an EQ_Mid parameter, an EQ_Treble parameter, or a Noise_Gate parameter.

17. The device according to claim 16, wherein the target application is a system player of the mobile terminal or a third-party player or another audio-video playing plugin.

18. The device according to claim 17, wherein the playing selection operation is a touch operation or a voice control operation.

19. A mobile terminal, comprising:
a processor; and
a memory,
wherein the memory stores an executable program code, and the processor is arranged to call the executable program code in the memory to execute the method according to any one of claims 1-9.

20. A computer storage medium, storing a program, which, when being executed, implements the method according to any one of claims 1-9.
